# EUROPÄISCHE PATENTSCHRIFT

(11) **EP 2 338 133 B1**
(45) Veröffentlichungstag und Bekanntmachung des Hinweises auf die Patenterteilung: **25.09.2013**
(21) Anmeldenummer: 09775978.1
(22) Anmeldetag: 20.07.2009
(51) Int. Cl.: G06K 19/077

(54) **LATENT-REAKTIV VERKLEBTE TPU/PC-SCHICHTSTOFFE**
LATENT-REACTIVELY GLUED TPU/PC LAYER MATERIALS
COUCHES DE TPU/PC COLLÉES À RÉACTIVITÉ LATENTE

(30) Priorität: 21.10.2008 DE 102008052572
(43) Veröffentlichungstag der Anmeldung: 29.06.2011
(73) Patentinhaber: Bundesdruckerei GmbH, 10958 Berlin (DE); Bayer MaterialScience AG, 51373 Leverkusen (DE)
(72) Erfinder: LÖWE, Reinhard, 14542 Werder OT Phöben (DE); KRÜGER, Per, 14197 Berlin (DE); KNEBEL, Michael, 10405 Berlin (DE); EHREKE, Jens, 12587 Berlin (DE); PUDLEINER, Heinz, 47800 Krefeld (DE); YESILDAG, Cengiz, 51377 Leverkusen (DE); MEYER, Klaus, 41539 Dormagen (DE); POPHUSEN, Dirk, 51467 Bergisch Gladbach (DE); BÜCHNER, Jörg, 51467 Bergisch Gladbach (DE)
(74) Vertreter: Jungblut, Bernhard Jakob
(86) Internationale Anmeldenummer: PCT/DE2009/000996
(87) Internationale Veröffentlichungsnummer: WO 2010/045902

(56) Entgegenhaltungen:
- US-A1- 2006 202 795

## Beschreibung

### Gebiet der Erfindung

Die Erfindung betrifft ein Sicherheits- und/oder Wertdokument mit einem Inlay, welches eine Kernschicht, die elektronische Bauteile und/oder diffraktive Sicherheitselemente enthält, umfasst, und mit Polymerschichten, in welche das Inlay einlaminiert ist. Die Erfindung betrifft des weiteren ein Verfahren zur Herstellung eines solchen Sicherheits- und/oder Wertdokumentes.

### Stand der Technik und Hintergrund der Erfindung.

Sicherheits- und/oder Wertdokumente, wie beispielsweise Personalausweise, Reisepässe, ID-Karten, Zugangskontrollausweise, Visa, Tickets, Führerscheine, Kraftfahrzeugpapiere, personalisierte Wertpapiere Kreditkarten, oder personalisierte Chipkarten, weisen zunehmend elektronische Schaltkreise, und sonstige aktive und passive elektronische Bauelemente, wie beispielsweise integrierter Halbleiter (ICs), aber auch von Chipmodulen, Displays, Batterien, Spulen, Kondensatoren, Kontaktstellen, usw., auf.

Bei der Einbringung solcher Bauteile in einem Kartenverbund ergibt sich beispielsweise bei gedünnten Halbleiterstrukturen das Problem der vorzeitigen Zerstörung oder Beeinträchtigung der Lebensdauer des Bauteils während der Lamination durch thermische und mechanische Überlastung bzw. Belastung. Bei bekannten Verfahren, beispielsweise zur Fertigung von Polycarbonat (PC)-Smart-Cards im Wege des Laminierens einzelner FolienLagen, erfolgt eine Positionierung einer PC-Folie direkt über dem Chip. Bei der industriell etablierten Vorgehensweise werden die vorbereiteten Kartenaufbauten und gleichzeitiger Einwirkung von Temperatur und Druck zu einem "quasi-monolithischen" Block zusammengepresst. Da PC aufgrund seines spezifischen Wärmeübergangskoeffizienten sowie seiner relativ hohen Glastemperatur T_{g} nicht sofort ausreichend gut fließt, herrscht direkt am Chip ein erhöhter mechanischer Druck, der in den meisten Fällen zur mechanischen Zerstörung des Chips führt.

Zur Vermeidung dieses Problems ist es bekannt, auf die elektronischen Bauteile selbstklebende bzw. elastische Schutzschichten, meist thermoelastische und/oder thermoplastische Schutzschichten, beispielsweise thermoplastisches Polyurethan (TPU), aufzubringen, wodurch die PC-Folien mit zwischengelegten Bauteilen, wie Chips, ohne hohes Zerstörungsrisiko für das Bauteil zu einer Karte zusammengefügt werden können. In der Regel sind diese Adhäsivschichten allerdings ein Schwachpunkt des Kartenaufbaus. Denn über die Kartenkante können leichter Wasserdampf und Luft hinein diffundieren und somit zu einer nachträglichen Delamination führen. Auch andere Umwelteinflüsse, insbesondere hohe Temperaturen, aber auch schnelle Temperaturwechsel können dazu führen, dass die Karte auf gespaltet und damit nicht mehr brauchbar wird.

Darüber hinaus sind Selbstklebefolien mit einer Dicke < 50 µm im industriellen Maßstab schwer bis gar nicht mehr handhabbar und unflexibel, wenn es z.B. darum geht, Kavitäten auszufüllen. Ähnliches gilt für Bauteile mit diffraktiven Strukturen, z.B. Volumen-Hologramme. Wird das Hologramm direkt mit weiteren PC Folien zu einer Karte laminiert, erfolgt dies in bestimmten Fällen unter visuell und maschinell quantifizierbaren Einbußen der Darstellungsqualität des Hologramms, insbesondere der Farben und des 3-dimensionalen Erscheinungsbildes. Die meisten Volumenhologramme auf Photopolymer-Basis besitzen nämlich einen Erweichungspunkt bzw. eine Glastemperatur Tg von deutlich unter 150 °C. Werden während des Laminierens die zu Beginn noch harten PC-Folien auf das weiche Photopolymer des Hologramms gepresst, so versetzen sich die Bragg-Ebenen und bestimmte Elemente erscheinen wellenlängenverschoben. Zum Beispiel werden aus grünen Bildelementen gelbe Bildelemente, etc. Gerade bei Volumenhologrammen wird zudem der 3-dimensionale Eindruck deutlich gemindert und die Hologramme erscheinen eher flach und zweidimensional sowie verwaschen. Auch diese Effekte beruhen auf dem Problem, dass das "harte" PC entweder auf spröde Flächen trifft und mechanischen Stress hervorruft oder weichere Körper, beispielsweise aus einem Photopolymer, verformt, wodurch diese Bauteile in Ihrer Funktion beeinträchtigt sind.

Allerdings sind die für die Schutzschichten verwendeten Grundpolymere strukturverschieden von dem für die weiteren Polymerschichten bevorzugten Polycarbonat, so dass eine stoffschlüssige Verbindung im Zuge des Laminierens mitunter nicht hergestellt wird. Es besteht also auch hier die Gefahr der Delamination. Es besteht folglich ein erhöhtes Fälschungs- und/oder Manipulationsrisiko, da das Inlay u.U. zerstörungsfrei herausgelöst und in einen anderen Schichtverbund, einer Fälschung, eingebaut werden kann. Zudem können Daten, die das Inlay trägt oder enthält, manipuliert werden.

Aus anderen technologischen Bereichen sind latent-reaktive Klebstoffe bekannt, wozu lediglich beispielsweise auf die Literaturstelle EP 0 922 720 A1 verwiesen wird.

Aus dem Dokument US2006/0202795 A1, welche den nächstliegenden Stand der Technik bildet, ist ein Sicherheits- und/oder Wertdokument mit elektronischen Bauteilen und mit Polymerschichten, in welche die elektronischen Bauteile einlaminiert sind, bekannt, wobei zwischen den Polymerschichten und den Bauteilen Klebstoffschichten angeordnet sind.

### Technisches Problem der Erfindung

Der Erfindung liegt daher das technische Problem zu Grunde, ein Sicherheits- oder Wertdokument anzugeben, welches einerseits bei der Herstellung ein reduziertes Risiko der Beschädigung integrierter elektronischer Bauteile mit sich bringt, und andererseits ein geringeres Delaminationsrisiko aufweist.

### Grundzüge der Erfindung und bevorzugte Ausführungsformen

Zur Lösung dieses technischen Problems lehrt die Erfindung ein Sicherheits- oder Wertdokument gemäß Anspruch 1. Latent-reaktive Klebstoffe sind an sich in vielfältiger Weise bekannt. Hierzu wird beispielsweise auf die Literaturstellen EP 0 922 720 verwiesen. Demnach handelt es sich um eine im Wesentlichen wässrige Dispersion mit wenigstens einem oberflächendesaktivierten Polyisocyanat und wenigstens einem mit Isocyanat reaktiven Polymer.

Die desaktivierten Polyisocyanate weisen Reaktionstemperaturen im Bereich von 30°C bis 180°C, insbesondere 40°C bis 150°C, auf. Deren Schmelzpunkte liegen im Bereich von 40°C bis 150°C.

Als Polyisocyanate (dieser Begriff schließt auch Diisocyanate ein) sind aliphatische, cycloaliphatische, heterocyclische oder aromatische Polyisocyanate geeignet, beispielsweise Diphenylmethan-4,4'-diisocyanat, Naphthalin-1,5-diisocyanat, 3,3'-Dimethyl-biphenyl-4,4'-diisocyanat, dimeres 1-Methyl-2,4-phenylen-diisocyanat, 3,3'-Diisocyanato-4,4'-dimethyl-N,N'-diphenylharnstoff, Additionsprodukt von 2 Mol 1-ifethyl-2,4-phenylendiisocyanat mit 1 Mol 1,2-Ethandiol, 1,4-Butandiol, 1,4-Cyclohexan-di-methanol, oder Ethanolamin, das Isocyanurat des IPDI. Im Falle der genannten Additionsprodukte liegt die Reaktionstemperatur unter 90°C.

Als Reaktionspartner.der Polyisocyanate kommen wasserlösliche oder wasserdispergierbare Emulsions- oder Dispersionspolymere in Frage, welche isocyanatreaktive Gruppen, wie beispielsweise Hydroxyl-, Amino-, Carboxyl-, oder Carbonamid-Gruppen, tragen. Bei diesen Polymeren ist der Anteil an Monomeren mit isocyanatreaktiven Gruppen typischerweise im Bereich von 0,2 bis 15 Gew.-%, insbesondere 1 bis 8 Gew.-%, bezogen auf das Polymer. Beispiele geeigneter Monomere sind: Allylalkohol, Hydroxyethyl- oder Hydroxypropyl-acrylat und -methacrylat, Butandiol-monoacrylat, ethoxylierte oder propoxylierte Acrylate, oder Methacrylate, N-Methylol-acrylamid, tert. Butylamino-ethyl-methacrylat, Acryl- und Methacrylsäure, Maleinsäure, Malleinsäure-monoester. Des Weiteren ist die Copolymerisation von Glycidylmethacrylat und/oder Allylglycidylether möglich. Diese enthalten eine Epoxygruppe, die in einem weiteren Schritt mit Aminen oder Aminoalkoholen zum sekundären Amin derivatisiert wird, beispielsweise mit Ethylamin, Ethylhexylamin, Isononylamin, Anilin, Toluidin, Xylidin, Benzylamin, Ethanolamin, 3-Amino-1-propanol, 1-Amino-2-propanol, 5-Amino-1-pentanol, 6-Amino-1-hexanol, 2-(2-Aminoethoxy)ethanol. Geeignet sind auch wasserlösliche Bindemittel, wie Polyvinylalkohol, teilverseiftes Polyvinylacetat, Hydroxyethylcellulose, Hydroxypropylcellulose, oder auch wasserdispergierbare hydroxyfunktionelle Polyester, hydroxyfunktionelle Sulfopolyester, und Polyurethandispersionen, Dispersionen von Polyamidoaminen, welche Carboxyl- Hydroxlprimäre oder sekundäre Aminogruppen tragen. Ebenso können wässrige kolloidale Dispersionen oder kolloidale Lösungen mit Teilchengrößen zwischen 1 und 100 nm auf Basis. thermoplastischer Polymere mit isocyahatreaktiven Gruppen, wie beispielsweise (höhermolekulare) feste Epoxyharze, Poly-ethylen-vinylalkohol oder Poly-ethylen-co-acrylsäure.

Das Verhältnis der Isocyanatgruppen zur Summe der isocynatreaktiven Gruppen, wie Hydroxy- oder Amino-, liegt zweckmäßigerweise im Bereich 0,1 bis 1,5.

Als Mittel zur Oberflächendesaktivierung der einzusetzenden Polyisocyanatpartikel kommen primäre und sekundäre aliphatische Amine, Di- oder Polyamine, Hydrazinderivate, Aminiden, Guanidinen, wie beispielsweise Ethylendiamin, 1,3-Propylendiamin, Diethylentriamin, Triethylentetramin, 2,5-Dimethylpiperazin, Methylnonandiamin, Isophorondiamin, 4,4'-Diaminodiecyclohexylmethan, Diamino- und Triaminopolypropylenether, Polyamindoamine und Gemische von Mon- Di-, und/oder Polyaminen, in Frage. Die Konzentration des Desaktivierungmittels soll 0,1 bis 25, insbesondere 0,5 bis 8 Equivalentprozent, bezogen auf die total vorhandenen Isocyanatgruppen. Die Polyisocyanatpartikel können vor, während oder nach dem Vermahlen auf eine Partikelgröße von beispielsweise unter 500 µm, insbesondere unter 100 µm, vorzugsweise unter 50 µm, oberflächendesaktiviert werden durch Umsatz mit dem Desaktivierungsmittel.

Das Vermahlen der Polyisocyanatpartikel (vor der Mischung mit dem (Bindemittel-) Polymer erfolgt beispielsweise mittels eines Dissolvers, Dispergiergeräten vom Rotor-Stator-Typ, Rührwerkskugelmühlen, Perl- und Sandmühlen, Kugelmühlen, oder Reibspaltmühlen bei Temperaturen von vorzugsweise weniger als 40°C.

Der Klebstoff kann des Weiteren Katalysatoren enthalten, welche die Oberflächendesaktivierung bzw. Reaktivierung und/oder die Vernetzungsreaktion des Polyisocyanats mit dem Polymer steuern. Es handelt sich vorzugsweise um hydrolysenstabile Katalysatoren, welche die wärmeaktivierte Vernetzungsreaktion beschleunigen, wie beispielsweise die in der Urethankatalyse bekannten organischen Zinn-, Eisen-, Blei-, Kobalt-, Bismuth-, Antimon-, oder Zinkverbindungen oder ihre Mischungen. Bevorzugt sind Alkylmercaptidverbindungen des Dibutylzinns. Die Menge an Katalysator liegt zweckmäßigerweise 0,0001 bis 3 Gew.-%, insbesondere 0,01 bis 1 Gew.-%, bezogen auf die Summe aus Polyisocyanat und Polymer.

Der Klebstoff kann schließlich fachübliche inerte Zusätze, wie Netzmittel, organische oder anorganische Verdickungsmittel, Weichmacher, Füllstoffe, Kunststoffpulver, Pigmente, Farbstoffe, UV-Stabilisatoren, Radikalfänger, Korrosionsschutzmittel, Flammschutzmittel, Treibmittel, und/oder inerte organische Lösemittel, enthalten.

Eine Schicht aus einem erfindungsgemäß eingesetzten Klebstoff kann dadurch hergestellt werden, dass eine wäßrige Dispersion oder Lösung der vorstehend beschriebenen Komponenten hergestellt und diese dann auf ein Substrat aufgetragen wird. Dann erfolgt eine Entfernung des Wassers bei Temperaturen unterhalb der Reaktionstemperatur des Polyisocyanats.

Eine Schicht aus einem erfindungsgemäß eingesetzten Klebstoff kann als solche bereits adhäsive Wirkung haben. Wesentlich ist aber, dass bei Erwärmung der Schicht über eine Reaktionstemperatur Tᵣ das Isöcyanat wieder aktiviert wird und mit anderen funktionellen Gruppen im Klebstoff, aber insbesondere auch in Polymeren, mit welchen der Klebstoff in Kontakt ist, reagiert und so eine stoffschlüssige und nicht ohne weiteres lösbare Verbindung bildet.

Mit der Erfindung wird zum ersten erreicht, dass elektronische Bauteile oder diffraktive Sicherheitselemente durch die Schutzschichten vor Beschädigung beim Laminieren geschützt werden. Des Weiteren ist durch den Einsatz des latent-reaktiven Klebstoffes erreicht, dass sich die Schutzschichten sicher und unlösbar in ein Sicherheits- und/oder Wertdokument integrieren lassen, obwohl die Schutzschichten aus einem Grundpolymer gebildet sind, welches sich mit dem Polymerschichten, beispielsweise PC, eher schlecht laminieren lassen.

Die elektronischen Bauelemente und/oder das diffraktive Sicherheitselelement können gleichsam freistehend eingesetzt werden, oder in einer Kernschicht eingebettet sein, wobei dann optional auch zwischen den Schutzschichten und der Kernschicht Klebstoffschichten mit einem latent-reaktiven Klebstoffe angeordnet sind.

Die Kernschicht kann aus einem thermoplastischen Elastomer, insbesondere ausgewählt aus der Gruppe bestehend aus "thermoplastische Elastomere auf Olefinbasis (TPO), vorwiegend PP/EPDM, z.B. Santoprene, vernetzte thermoplastische Elastomere auf Olefinbasis (TPV), z.B. PP/EPDM, z.B. Sarlink (DSM), thermoplastische Elastomere auf Urethanbasis (TPU), z.B. Desmopan, Texin, (Bayer), thermoplastische Copolyester (TPE), z.B. Hytrel (DuPont), Styrol-Blockcopolymere (SBS, SEBS, SEPS, SEEPS und MBS) z.B. Septon (Kuraray) oder Thermolast K (Kraiburg TPE), thermoplastische Copolyamide, z.B. PEBA , gebildet sein. Es sind aber auch thermoplastische Polymere mit vergleichsweise hoher Plastizität einsetzbar.

Die Schutzschichten können gleich oder verschieden sein und können aus einem thermoplastischen Elastomer, insbesondere ausgewählt aus der Gruppe bestehend aus "thermoplastische Elastomere auf Olefinbasis (TPO), vorwiegend PP/EPDM, z.B. Santoprene, vernetzte thermoplastische Elastomere auf Olefinbasis (TPV), z.B. PP/EPDM, z.B. Sarlink (DSM), thermoplastische Elastomere auf Urethanbasis (TPU), z.B. Desmopan, Texin, (Bayer), thermoplastische Copolyester (TPE), z.B. Hytrel (DuPont), Styrol-Blockcopolymere (SBS, SEBS, SEPS, SEEPS und MBS) z.B. Septon (Kuraray) oder Thermolast K (Kraiburg TPE), thermoplastische Copolyamide, z.B. PEBA , gebildet sein. Es sind aber auch thermoplastische Polymere mit vergleichsweise hoher Plastizität einsetzbar.

Die Polymerschichten können gleich oder verschieden sein und aus einem Grundpolymer ausgewählt aus der Gruppe bestehend aus "PC (Polycarbonat, insbesondere Bisphenol A Polycarbonat), PET (Polyethylenglykolterephthalat), PET-G, PET-F, PMMA (Polymethylmethacrylat), ABS (AcrylnitrilButadien-Styrol), PE (Polyethylen), PP (Polypropylen), PI (Polyimid oder Poly-trans-Isopren), PVC (Polyvinylchlorid) und Copolymere solcher Polymere" gebildet sein.

Bevorzugt ist es, wenn die Kernschicht, sofern eingerichtet, aus einem TPE, die Schutzschichten aus einem thermoplastischen Polyurethan und die Polymerschichten aus einem PC gebildet sind.

Die Kernschicht, sofern eingerichtet, hat typischerweise eine Dicke von 100 - 600 µm, vorzugsweise von 200 - 400 µm. Die Schutzschichten haben typischerweise, gleich oder verschieden, eine Dicke von 30 - 250 µm, vorzugsweise 30 - 150 µm. Die Polymerschichten haben typischerweise eine Dicke im Bereich von 30 - 400 µm, vorzugsweise von 50 - 250 µm.

Eine der Schutzschichten kann eine Ausnehmung aufweisen oder beide Schutzschichten können Ausnehmungen aufweisen. Eine der Schutzschichten kann auf der der Kernschicht oder dem elektronischen Bauteil zugewandten Seite und/oder auf der der Kernschicht oder dem elektronischen Bauteil abgewandten Seite ganzflächig oder teilflächig eine Druckschicht unmittelbar tragen oder beide Schutzschichten können jeweils auf der der Kernschicht oder dem elektronischen Bauteil zugewandten Seite und/oder auf der der Kernschicht oder dem elektronischen Bauteil abgewandten Seite ganzflächig oder teilflächig eine Druckschicht unmittelbar tragen.

Die Erfindung betrifft auch ein Verfahren zur Herstellung eines erfindungsgemäßen Sicherheits- und/oder Wertdokuments mit den folgenden Verfahrensschritten: a1) es wird ein elektronisches Bauelement oder ein diffraktives Sicherheitselement zur Verfügung gestellt, oder a2) es wird eine Kernschicht mit eingebetteten elektronischen Bauteilen und/oder diffraktiven Elementen hergestellt wird, b) auf die Kernschicht und/oder auf eine Seite der Schutzschichten, optional nach Bedruckung zumindest einer der Schutzschichten, und/oder auf beide Seiten der Schutzschichten wird ein latent-reaktiver Klebstoff aufgetragen, und c) die Kernschicht, die Schutzschichten sowie die Polymerschichten werden zusammengeführt zu einem Schichtaufbau der Reihenfolge "Polymerschichten, Schutzschicht, elektronisches Bauelement und/oder diffraktives Element bzw. Kernschicht, Schutzschicht, Polymerschichten" und miteinander laminiert, wobei besagte Schichten auf eine Temperatur erwärmt werden, welche oberhalb einer Reaktionstemperatur Tᵣ des latent-reaktiven Klebstoffes liegt. Das Laminieren kann bei Temperaturen im Bereich von 100 - 230 °C, insbesondere 170 - 210 °C, für eine Dauer von 1 bis 240 min., insbesondere 5 - 60 min., bei einem Druck von 0 - 400 N/cm², insbesondere 10 - 200 N/cm², und optional unter Vakuum im Bereich von 2 - 1000 mbar, ausgeführt werden.

Im Einzelnen ist zum Laminierungsvorgang folgendes anzumerken. Grundsätzlich geht dem Laminierungsvorgang der Schritt des Zusammentragens der verschiedenen Polymerschichten voraus. Das Zusammentragen kann in allen fachüblichen Weisen kontinuierlich, quasikontinuierlich oder diskontinuierlich erfolgen. Bei einer sogenannten Rolle zu Rolle Produktion (kontinuierliches Zusammentragen) können alle Polymerschichten, ggf. einschließlich Inlay, parallel zueinander geführt werden, so dass nur beim Einlegen einer Rolle auf eine Passgenauigkeit aller Bahnen geachtet werden muss. Nach dem Einlegen und Anfahren erfolgt eine automatisierte Überwachung der Laufgenauigkeit der Bahnen und automatische Korrektur, so dass die verschiedenen Polymerschichten stets in vorgegebener, definierter Position zueinander laufen. Anschließend erfolgt eine Lamination der zueinander positionierten Bahnen, wobei sich die Rollenlamination als besonders effiziente und schnelle Verfahrensweise anbietet. Alternativ kann mit der Bogenlamination (diskontinuierliches Zusammentragen) gearbeitet werden. Dabei enthält ein Bogen verschiedene Bereiche einer Polymerschicht, welche verschiedenen Sicherheits- und/oder Wertdokumenten zugeordnet sind, oder besteht daraus. Schließlich kann mit Dokumenten-weiser Einzel-Lamination gearbeitet werden. Dabei können beispielsweise elektronische Schaltungen auf Funktion und Druckschichten auf Fehlerfreiheit geprüft werden, und zwar bevor die betreffenden Polymerschichten zusammengetragen werden. Dadurch wird Ausschuss minimiert, da nur geprüfte Polymerschichten zueinander getragen und dann miteinander zusammengefügt werden. Es entfällt die Notwendigkeit alle Polymerschichten nachzufertigen, sollte eine der Polymerschichten fehlerhaft sein. Beim quasikontinuierlichen Zusammentragen werden einzelne Lagen des Polymerschichtverbundes an einer Position zusammengeführt. Die Besonderheit liegt darin, dass die Zuführung sowohl von Rolle als auch Einzelbogen eines Stapels erfolgen kann und dass nicht nur streng parallel sondern auch über Kreuz gearbeitet werden kann. In einer weiteren Verfahrensweise erfolgt das Zusammentragen in einer kombinierten Rolle-zu-Rolle- und Bogenverarbeitung. Hier kann das Inlay als Bogen und die weiteren Polymerschichten von der Rolle zugeführt werden. Beim Zusammenfügen bzw. Laminieren werden die verschiedenen Polymerschichten zu einem monolithischen Verbund verbunden.

Bevorzugt ist für die weiteren Polymerschichten der Einsatz von PC-Werkstoffen, wobei beispielsweise für die weiteren Polymerschichten, insbesondere sogenannte Nieder-T_{g}-Werkstoffe einsetzbar sind. Nieder-T_{g}-Werkstoffe sind Polymere, deren Glastemperatur unterhalb von 140 °C liegt. Bevorzugt ist es dabei, wenn die weiteren Polymerschichten aus gleichen oder verschiedenen Polymeren gebildet sind, wobei das Grundpolymer der unmittelbar benachbarten weiteren Polymerschichten, gleiche oder verschiedene miteinander reaktive Gruppen enthält, wobei bei einer Laminiertemperatur von weniger als 200°C reaktive Gruppen des latent-reaktiven Klebstoffes miteinander und/oder mit reaktiven Gruppen der weiteren Polymerschichten reagieren und eine kovalente Bindung miteinander eingehen. Dadurch kann die Laminiertemperatur herabgesetzt werden kann, ohne dass dadurch der innige Verbund der laminierten Schichten gefährdet wird. Dies liegt daran, dass die verschiedenen Polymerschichten auf Grund der Reaktion der jeweiligen reaktiven Gruppen nicht mehr ohne weiteres delaminiert werden können. Denn es findet zwischen den Schichten eine reaktive Kopplung statt, gleichsam ein reaktives Laminieren. Zum Zweiten wird ermöglicht, dass wegen der niedrigeren Laminiertemperatur die thermische Belastung der elektronischen Bauteile verringert wird. Die Auswahl der geeigneten reaktiven Gruppen für die jeweiligen Grundpolymere ist für den Fachmann für Polymerchemie unschwer möglich. Beispielhafte reaktiven Gruppen sind ausgewählt aus der Gruppe bestehend aus "-CN, -OCN, -NCO, -NC, -SH, -Sₓ, -Tos, -SCN, -NCS, -H, Epoxy (-CHOCH₂), -NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R eine beliebige reaktive oder nicht-reaktive Gruppe sein kann, beispielsweise -H, -Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterozyklen mit einem oder mehreren gleichen oder verschiedenen Heteroatomen N, O, oder S". Andere reaktive Gruppen sind selbstverständlich möglich. Hierzu gehören die Reaktionspartner der Diels-Alder Reaktion oder einer Metathese. Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnde Spacergruppen sind dem Fachmann wohl vertraut und brauchen daher hier nicht weiter beschrieben zu werden. Lediglich beispielhaft seien Spacergruppen genannt, welche ausgewählt sind aus der Gruppe bestehend aus "-(CH₂)ₙ-, -(CH₂-CH₂-O)ₙ-, -(SiR₂-O)ₙ-, -(C₆H₄)ₙ-, -(C₆H₁₀)ₙ-, C₁-Cₙ-Alkyl, C₃-C_{(cn+3)}-Aryl, C₄-C₍ₙ₊₄₎-ArAlkyl, jeweils verzweigt oder linear, gesättigt oder ungesättigt, optional substituiert, oder korrespondierende Heterozyklen mit einem oder mehreren , gleichen oder verschiedenen Heteroatomen O, N, oder S" mit n=1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2007, verwiesen. Der Begriff des Grundpolymers bezeichnet im Rahmen der vorstehenden Ausführungen eine Polymerstruktur, welche keine unter den eingesetzten Laminierbedingungen reaktive Gruppen trägt. Es kann sich dabei um Homopolymere oder Copolymere handeln. Es sind auch gegenüber den genannten Polymere modifizierte Polymere umfasst.

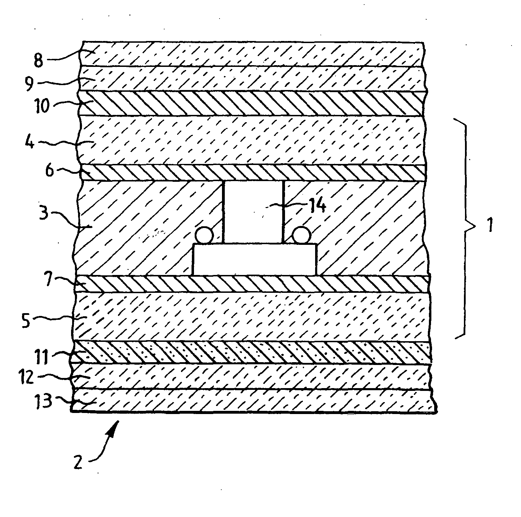

Im Folgenden wird die Erfindung anhand einer lediglich eine Ausführungsformen darstellenden Figur 1 näher erläutert. Sie zeigt eine schematische Darstellung eine erfindungsgemäß hergestellten Sicherheits- und/oder Wertdokumentes.

Man erkennt eine Kernschicht 3, in welche elektronische Bauteile, beispielsweise eine Transponderschaltkreis mit Antenne, integriert ist. Die Kernschicht 3 besteht aus einem thermoplastischen Elastomer, beispielsweise thermoplastische Elastomere auf Olefinbasis (TPO), vorwiegend PP/EPDM, z.B. Santoprene, vernetzte thermoplastische Elastomere auf Olefinbasis (TPV), z.B. PP/EPDM, z.B. Sarlink (DSM), thermoplastische Elastomere auf Urethanbasis (TPU), z.B. Desmopan, Texin, (Bayer), thermoplastische Copolyester (TPE), z.B. Hytrel (DuPont), Styrol-Blockcopolymere (SBS, SEBS, SEPS, SEEPS und MBS) z.B. Septon (Kuraray) oder Thermolast K (Kraiburg TPE), thermoplastische Copolyamide, z.B. PEBA.Des Weiteren sind beidseitig der Kernschicht 3 Schutzschichten 4, 5 eingerichtet, welche über zwei Schichten 6, 7 aus einem latent-reaktiven Klebstoff mit der Kernschicht 3 verbunden sind. Die Schutzschichten 4, 5 sind im Beispiel aus einem thermoplastischen Polyurethan gebildet.

Dieser Verbund ist in weitere Polymerschichten 8, 9, 12, 13 einlaminiert worden, welche aus einem Polycarbonat gebildet sind. Dabei sind zwischen den Schutzschichten 4, 5 und den Polymerschichten 9, 12 weitere Schichten 10, 11, mit dem latent-reaktiven Klebstoff eingerichtet.

Durch den Einsatz des latent-reaktiven Klebstoffes sind die Schutzschichten 4, 5 in dem Gesamtverbund stoffschlüssig verbunden, so dass letztendlich ein monolithisches Sicherheits- und/oder Wertdokument 2 erhalten wird.

Es versteht sich, dass die Kernschicht 3 für die Erfindung nicht wesentlich ist und auch ersatzlos weggelassen werden kann. Dann sind im Bereich, wo die Kernschicht 3 gezeichnet ist, nur die elektronischen Bauteile 4 angeordnet und die Schutzschichten 4, 5 rücken entsprechend näher zusammen.

Im Folgenden wird die Herstellung eines erfindungsgmäß eingesetzten Klebstoffes beschrieben. Mit 106 Gewichtsteilen Wsser, 33 Gewichtsteilen Kelzan S, 3% Lösung in Wasser (Monsanto), 1 Gewichtsteil Polyoxyethylensorbitantrioleat, 2 - 6 Gewichtsteilen Polyamin (Euretek 505 (Witco), ein Polyamindoamin und/oder Jeffamin T-403 (Huntsman), einem Aminoterminiertes Polyoxypropylen) und 80 Gewichtsteilen Polyisocyanatpulver (Partikelgröße kleiner 45 µm) wird in einem Dissolver eine wäßrige Suspension hergestellt. Als Polyisocyanat kommt beispielsweise das IPDI-Isocyanurat (IPDI-T 1890/100, Hüls) in Frage. Aber auch die anderen vorstehend genannten Polyisocyanate können eingesetzt werden.

## Patentansprüche

1. Sicherheits- oder Wertdokument (2)
mit elektronischen Bauteilen (14) oder diffraktiven Sicherheitselementen,
mit zumindest einer einseitig oder mit zwei beidseitig der elektronischen Bauteile (14) oder des diffraktiven Sicherheitselements angeordneten Schutzschichten (4, 5), welche aus einem ersten Grundpolymer gebildet sind,
mit aus einem zweiten und von dem ersten Grundpolymer verschiedenen Grundpolymer gebildeten Polymerschichten (8, 9, 12, 13), in welche die elektronischen Bauteile (14) oder das diffraktive Sicherheitselement mit den Schutzschichten (4, 5) einlaminiert sind,
wobei zumindest zwischen den Polymerschichten (8, 9, 12, 13) und den Schutzschichten (4, 5) Klebstoffschichten (6, 7, 10, 11) mit einem latent-reaktiven Klebstoff angeordnet sind.

2. Sicherheits- oder Wertdokument nach Anspruch 1, wobei die elektronischen Bauelemente (14) oder das diffraktive Sicherheitselelement in einer Kernschicht (3) eingebettet sind.

3. Sicherheits- oder Wertdokument (2) nach Anspruch 2, wobei die Kernschicht (3) aus einem thermoplastischen Elastomer, insbesondere ausgewählt aus der Gruppe bestehend aus thermoplastische Elastomere auf Olefinbasis (TPO), vorwiegend PP/EPDM, vernetzte thermoplastische Elastomere auf Olefinbasis (TPV), thermoplastische Elastomere auf Urethanbasis (TPU), thermoplastische Copolyester (TPE), Styrol-Blockcopolymere (SBS, SEBS, SEPS, SEEPS und MBS) thermoplastische Copolyamide, gebildet ist.

4. Sicherheits- oder Wertdokument (2) nach einem der Ansprüche 1 bis 3, wobei die Schutzschichten (4, 5) aus einem thermoplastischen Elastomer, insbesondere ausgewählt aus der Gruppe bestehend aus thermoplastische Elastomere auf Olefinbasis (TPO), vorwiegend PP/EPDM, vernetzte thermoplastische Elastomere auf Olefinbasis (TPV), thermoplastische Elastomere auf Urethanbasis (TPU), thermoplastische Copolyester (TPE), Styrol-Blockcopolymere (SBS, SEBS, SEPS, SEEPS und MBS) oder thermoplastische Copolyamide, gebildet sind.

5. Sicherheit- oder Wertdokument (2) nach einem der Ansprüche 1 bis 4, wobei die Polymerschichten (8, 9, 12 13) aus einem Grundpolymer ausgewählt aus der Gruppe bestehend aus PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (polymethylen), PP (Polypropylen), PI (Polyimid oder Poly-trans-Isopren), PVC (Polyvinylchlorid) und Copolymere solcher Polymere gebildet sein.

6. Sicherheits- oder Wertdokument (2) nach einem der Ansprüche 2 bis 5, wobei die Kernschicht (3) eine Dicke von 100 - 600 µm, vorzugsweise von 200 - 400 µm, aufweist.

7. Sicherheits- oder Wertdokument (2) nach einem der Ansprüche 1 bis 6, wobei die Schutzschichten (4, 5) eine Dicke von 30 - 250 µm, vorzugsweise 30 - 150 µm, aufweisen.

8. Sicherheits- oder Wertdokument (2) nach einem der Ansprüche 1 bis 7, wobei eine Schutzschicht (4, 5) eine Ausnehmung aufweist oder wobei beide Schutzschichten (4, 5) Ausnehmungen aufweisen.

9. Sicherheits- oder Wertdokument (2) nach einem der Ansprüche 1 bis 8, wobei eine der Schutzschichten (4, 5) auf der der Kernschicht (3) oder dem elektronischen Bauteil (14) zugewandten Seite oder auf der der Kernschicht (3) oder dem elektronischen Bauteil (14) abgewandten Seite ganzflächig oder teilflächig eine Druckschicht unmittelbar trägt oder wobei beide Schutzschichten (4, 5) jeweils auf der der Kernschicht (3) oder dem elektronischen Bauteil (14) zugewandten Seite oder auf der der Kernschicht (3) oder dem elektronischen Bauteil (14) abgewandten Seite ganzflächig oder teilflächig eine Druckschicht unmittelbar tragen.

10. Sicherheits- oder Wertdokument (2) nach einem der Ansprüche 1 bis 7, wobei die Polymerschichten (8, 9, 12, 13) eine Dicke im Bereich von 30 - 400 µm, vorzugsweise von 50 - 250 µm aufweisen.

11. Sicherheits- oder Wertdokument (2) nach einem der Ansprüche 1 bis 10, wobei eine der Polymerschichten (8, 9, 12, 13) oder mehrere der Polymerschichten (8, 9, 12, 13) jeweils eine Druckschicht tragen.

12. Verfahren zur Herstellung eines Sicherheits- oder Wertdokuments (2) nach einem der Ansprüche 1 bis 11 mit den folgenden Verfahrensschritten:
a1) es wird ein elektronisches Bauelement (14) oder ein diffraktives Sicherheitselement zur Verfügung gestellt, oder
a2) es wird eine Kernschicht (3) mit eingebetteten elektronischen Bauteilen (14) oder diffraktiven Elementen hergestellt
b) auf die Kernschicht (3) oder auf eine Seite der Schutzschichten (4, 5) oder auf beide Seiten der Schutzschichten (4, 5) wird ein latent-reaktiver Klebstoff (6, 7, 10, 11) aufgetragen, und
c) die Kernschicht, (3), die Schutzschichten (4, 5) sowie die Polymerschichten (8, 9, 12, 13) werden zusammengeführt zu einem Schichtaufbau der Reihenfolge Polymerschichten (8, 9), Schutzschicht (4), elektronisches Bauelement (14) oder diffraktives Element bzw. Kernschicht (3), Schutzschicht (5), Polymerschichten (12, 13) und miteinander laminiert, wobei besagte Schichten auf eine Temperatur erwärmt werden, welche oberhalb einer Reaktionstemperatur Tᵣ des latent-reaktiven Klebstoffes liegt.

13. Verfahren nach Anspruch 12, wobei das Laminieren bei Temperaturen im Bereich von 100 - 230 °C, insbesondere 170 - 210 °C, für eine Dauer von 1 bis 240 min., insbesondere 5 - 60 min., bei einem Druck von 0 - 400 N/cm², insbesondere 10 - 200 N/cm², ausgeführt wird.

14. Verfahren nach Anspruch 12, wobei in Stufe b) der Auftrag des latent-reaktiven Klebstoffes (6, 7, 10, 11) auf die Schutzschichten (4, 5) nach Bedruckung zumindest einer der Schutzschichten (4, 5) erfolgt.

15. Verfahren nach Anspruch 13, wobei das Laminieren unter Vakuum im Bereich von 2 - 1000 mbar ausgeführt wird.

## Claims

1. A security or valuable document (2) comprising electronic components (14) or diffractive security elements,
comprising at least one protective layer (4, 5) arranged on one side or comprising two protective layers (4, 5) arranged on both sides of the electronic components (14) or of the diffractive security element, said protective layers (4, 5) being formed from a first base polymer,
comprising polymer layers (8, 9, 12, 13) formed from a second base polymer being different from the first base polymer, into said polymer layers (8, 9, 12, 13) the electronic components (14) or the diffractive security element having the protective layers (4, 5) being laminated,
wherein at least between the polymer layers (8, 9, 12, 13) and the protective layers (4, 5), adhesive layers (6, 7, 10, 11) with a latent reactive adhesive are arranged.

2. The security or valuable document according to claim 1, wherein the electronic components (14) or the diffractive security element are embedded in a core layer (3).

3. The security or valuable document (2) according to claim 2, wherein the core layer (3) is formed from a thermoplastic elastomer, in particular selected from the group consisting of thermoplastic elastomers based on olefin (TPO), mainly PP/EPDM, cross-linked thermoplastic elastomers based on olefin (TPV), thermoplastic elastomers based on urethane (TPU), thermoplastic copolyesters (TPE), styrene-block copolymers (SBS, SEBS, SEPS, SEEPS, and MBS), thermoplastic copolyamides.

4. The security or valuable document (2) according to one of claims 1 to 3, wherein the protective layers (4, 5) are formed from a thermoplastic elastomer, in particular selected from the group consisting of thermoplastic elastomers based on olefin (TPO), mainly PP/EPDM, cross-linked thermoplastic elastomers based on olefin (TPV), thermoplastic elastomers based on urethane (TPU), thermoplastic copolyesters (TPE), styrene block copolymers (SBS, SEBS, SEPS, SEEPS, and MBS), thermoplastic copolyamides.

5. The security or valuable document (2) according to one of claims 1 to 4, wherein the polymer layers (8, 9, 12, 13) are formed from a base polymer selected from the group consisting of PC (polycarbonate, in particular bisphenol A polycarbonate), PET (polyethylene glycol terephthalate), PET-G, PET-F, PMMA (polymethyl methacrylate), ABS (acrylonitrile butadiene styrene), PE (polyethylene), PP (polypropylene), PI (polyimide or poly-trans-isoprene), PVC (polyvinyl chloride) and copolymers of these polymers.

6. The security or valuable document (2) according to one of claims 2 to 5, wherein the core layer (3) has a thickness of 100 - 600 microns, preferably 200 - 400 microns.

7. The security or valuable document (2) according to one of claims 1 to 6, wherein the protective layers (4, 5) have a thickness in the range from 30 to 250 microns, preferably from 30 to 150 microns.

8. The security or valuable document (2) according to one of claims 1 to 7, wherein one protective layer (4, 5) has a recess or both protective layers (4, 5) have recesses.

9. The security or valuable document (2) according to one of claims 1 to 8, wherein one of the protective layers (4, 5) directly carries on the side directed toward the core layer (3) or the electronic component (14), or on the side directed away from the core layer (3) or the electronic component (14), on the whole surface or on a partial surface, a printing layer, or wherein both protective layers (4, 5) directly carry on the side directed toward the core layer (3) or the electronic component (14), or on the side directed away from the core layer (3) or the electronic component (14), on the whole surface or on a partial surface, one printing layer each.

10. The security or valuable document (2) according to one of claims 1 to 7, wherein the polymer layers (8, 9, 12, 13) have a thickness in the range from 30 to 400 microns, preferably from 50 to 250 microns.

11. The security or valuable document (2) according to any one of claims 1 to 10, wherein one of the polymer layers (8, 9, 12, 13) or a plurality of the polymer layers (8, 9, 12, 13) each carry a printing layer.

12. A method for producing a security or valuable document (2) according to one of claims 1 to 11, comprising the steps of:
a1) an electronic component (14) or a diffractive security element is provided, or
a2) a core layer (3) with embedded electronic components (14) or diffractive elements is prepared,
b) on the core layer (3) or on one side of the protective layers (4, 5) or on both sides of the protective layers (4, 5), a latent-reactive adhesive (6, 7, 10, 11) is applied, and
c) the core layer (3), the protective layers (4, 5), and the polymer layers (8, 9, 12, 13) are brought together to form a layer structure having the sequence: polymer layers (8, 9), protective layer (4), electronic component (14) or diffractive element or core layer (3), protective layer (5), polymer layers (12, 13), and are laminated together, said layers being heated to a temperature, which is above the reaction temperature Tᵣ of the latent-reactive adhesive.

13. The method according to claim 12, wherein the lamination is carried out at temperatures in the range from 100 to 230 °C, in particular 170 to 210 °C, for a period from 1 to 240 min, in particular 5 to 60 min, at a pressure of 0 to 400 N/cm², in particular 10 to 200 N/cm².

14. The method according to claim 12, wherein in step b) the application of the latent-reactive adhesive (6, 7, 10, 11) on the protective layers (4, 5) is carried out after imprinting at least one of the protective layers (4, 5).

15. The method according to claim 13, wherein the lamination is carried out under vacuum in the range from 2 to 1,000 mbar.

## Revendications

1. Document de sécurité ou de valeur (2) comprenant des composants électroniques (14) ou des éléments de sécurité diffractifs,
comprenant au moins une couche de protection (4, 5) disposée à un côté ou comprenant deux couches de protection (4, 5) disposées aux deux côtés des composants électroniques (14) ou de l'élément de sécurité diffractif, ces couches de protection (4, 5) étant formées à partir d'un premier polymère de base,
comprenant des couches de polymère (8, 9, 12, 13) formées à partir d'un deuxième polymère de base étant différent du premier polymère de base, dans ces couches de polymère (8, 9, 12, 13) les composants électroniques (14) ou l'élément de sécurité diffractif ayant les couches de protection (4, 5) étant stratifiés,
dans lequel au moins entre les couches de polymère (8, 9, 12, 13) et les couches de protection (4, 5), des couches adhésives (6, 7, 10, 11) comprenant un adhésif à réactivité latente sont disposées.

2. Document de sécurité ou de valeur selon la revendication 1, dans lequel les composants électroniques (14) ou l'élément de sécurité diffractif sont incorporés dans une couche noyau (3).

3. Document de sécurité ou de valeur (2) selon la revendication 2, dans lequel la couche noyau (3) est formée à partir d'un élastomère thermoplastique, en particulier choisi à partir du groupe consistant en élastomères thermoplastiques à base d'oléfine (TPO), principalement PP/EPDM, élastomères thermoplastiques réticulés à base d'oléfine (TPV), élastomères thermoplastiques à base d'uréthane (TPU), copolyesters thermoplastiques (TPE), copolymères blocs styréniques (SBS, SEBS, SEPS, SEEPS et MBS), copolyamides thermoplastiques.

4. Document de sécurité ou de valeur (2) selon une des revendications 1 à 3, dans lequel les couches de protection (4, 5) sont formées à partir d'un élastomère thermoplastique, en particulier choisi à partir du groupe consistant en élastomères thermoplastiques à base d'oléfine (TPO), principalement PP/EPDM, élastomères thermoplastiques réticulés à base d'oléfine (TPV), élastomères thermoplastiques à base d'uréthane (TPU), copolyesters thermoplastiques (TPE), copolymères blocs styréniques (SBS, SEBS, SEPS, SEEPS et MBS), copolyamides thermoplastiques.

5. Document de sécurité ou de valeur (2) selon une des revendications 1 à 4, dans lequel les couches de polymère (8, 9, 12, 13) sont formées à partir d'un polymère de base choisi à partir du groupe consistant en PC (polycarbonate, en particulier polycarbonate de bisphénol A), PET (téréphthalate de polyéthylène glycol), PET-G, PET-F, PMMA (polyméthyl méthacrylate), ABS (acrylonitrile butadiène styrène), PE (polyéthylène), PP (polypropylène), PI (polyimide ou poly-trans-isoprène), PVC (polychlorure de vinyle) et copolymères ces polymères.

6. Document de sécurité ou de valeur (2) selon une des revendications 2 à 5, dans lequel la couche noyau (3) a une épaisseur entre 100 et 600 µm, de préférence 200 et 400 µm.

7. Document de sécurité ou de valeur (2) selon une des revendications 1 à 6, dans lequel les couches de protection (4, 5) ont une épaisseur entre 30 et 250 µm, de préférence 30 et 150 µm.

8. Document de sécurité ou de valeur (2) selon une des revendications 1 à 7, dans lequel une couche de protection (4, 5) a un évidement ou les deux couches de protection (4, 5) ont des évidements.

9. Document de sécurité ou de valeur (2) selon une des revendications 1 à 8, dans lequel une des couches de protection (4, 5) directement porte sur le côté faisant face à la couche noyau (3) ou le composant électronique (14), ou sur le côté opposé à la couche noyau (3) ou le composant électronique (14), sur la surface entière ou sur une surface partielle, une couche d'impression, ou dans lequel les deux couches de protection (4, 5) directement portent sur le côté faisant face à la couche noyau (3) ou le composant électronique (14), ou sur le côté opposé à la couche noyau (3) ou le composant électronique (14), sur la surface entière ou sur une surface partielle, une couche d'impression chacune.

10. Document de sécurité ou de valeur (2) selon une des revendications 1 à 7, dans lequel les couches de polymère (8, 9, 12, 13) ont une épaisseur comprise dans la gamme de 30 à 400 µm, de préférence de 50 à 250 µm.

11. Document de sécurité ou de valeur (2) selon une des revendications 1 à 10, dans lequel une des couches de polymère (8, 9, 12, 13) ou plusieurs couches de polymère (8, 9, 12, 13) chacune portent une couche d'impression.

12. Procédé de fabrication d'un document de sécurité ou de valeur (2) selon une des revendications 1 à 11, comprenant les étapes suivantes:
a1) un composant électronique (14) ou un élément de sécurité diffractif est prévu, ou
a2) une couche noyau (3) avec des composants électroniques (14) ou des éléments diffractifs incorporés est préparée,
b) sur la couche noyau (3) ou sur un côté des couches de protection (4, 5) ou sur les deux côtés des couches de protection (4, 5), un adhésif à réactivité latente (6, 7, 10, 11) est appliqué, et
c) la couche noyau (3), les couches de protection (4, 5) et les couches de polymère (8, 9, 12, 13) sont combinées pour former une structure stratifiée avec la séquence: couches de polymère (8, 9), couche de protection (4), composant électronique (14) ou élément diffractif ou couche noyau (3), couche de protection (5), couches de polymère (12, 13), et sont stratifiées ensemble, ces couches étant chauffées à une température, qui est supérieure à la température de réaction Tᵣ de l'adhésif à réactivité latente.

13. Procédé selon la revendication 12, dans lequel la stratification est réalisée à des températures comprises dans la gamme entre 100 et 230 °C, en particulier 170 et 210 C, pendant un temps de 1 à 240 min, en particulier 5 à 60 min, à une pression de 0 à 400 N/cm², en particulier 10 à 200 N/cm².

14. Procédé selon la revendication 12, dans lequel dans l'étape b) l'application de l'adhésif à réactivité latente (6, 7, 10, 11) sur les couches de protection (4, 5) est réalisée après l'impression d'au moins une des couches de protection (4, 5).

15. Procédé selon la revendication 13, dans lequel la stratification est réalisée sous un vide compris dans la gamme entre 2 et 1000 mbar.
